# EUROPÄISCHE PATENTSCHRIFT

(11) **EP 0 623 178 B1**
(45) Veröffentlichungstag und Bekanntmachung des Hinweises auf die Patenterteilung: **26.07.1995**
(21) Anmeldenummer: 93902186.1
(22) Anmeldetag: 14.01.1993
(51) Int. Cl.: C14C 3/22, C08F 251/00

(54) **POLYMERE GERBSTOFFE**
POLYMERIC TANNING AGENTS
SUBSTANCES TANNANTES POLYMERES

(30) Priorität: 21.01.1992 DE 4201452
(43) Veröffentlichungstag der Anmeldung: 09.11.1994
(73) Patentinhaber: BASF Aktiengesellschaft, 67063 Ludwigshafen (DE)
(72) Erfinder: DENZINGER, Walter, D-6720 Speyer (DE); HARTMANN, Heinrich, D-6703 Limburgerhof (DE); WEGNER, Brigitte, D-6725 Roemerberg (DE)
(86) Internationale Anmeldenummer: EP9300061
(87) Internationale Veröffentlichungsnummer: WO9314227

(56) Entgegenhaltungen:
- EP-A- 0 441 197
- GB-A- 2 137 654
- J.A.L.C.A. Bd. 85, Nr. 11, November 1990, Seiten 425 - 430 Y. LAKSHMINARAYANA'A NEW CATEGORY OF ACRYLIC SYNTAN FOR RETANNING CHROME LEATHER'
- CHEMICAL ABSTRACTS, vol. 94, no. 12, Juni 1981, Columbus, Ohio, US; abstractno. 192926s, 'WATER-ABSORBENT GRAFT COPOLYMER' Seite 16-17 ;

## Beschreibung

Die vorliegende Erfindung betrifft die Verwendung von wasserlöslichen Pfropfpolymerisaten, die durch Polymerisation von Acrylsäure oder Methacrylsäure mit gegebenenfalls weiteren Monomeren in Gegenwart von Monosacchariden, Oligosacchariden, Polysacchariden oder Derivaten davon erhältlich sind, als Gerbstoffe bei der Leder- und Pelzherstellung.

Bei der Lederherstellung wird die Hauptgerbung üblicherweise mit mineralischen Gerbstoffen wie basischen Chrom-, Aluminium- und/oder Zirkonsalzen allein oder in Kombination mit synthetischen Gerbstoffen durchgeführt. Eine anschließende Nachgerbung mit natürlichen oder synthetischen Gerbstoffen dient der Verbesserung von Ledereigenschaften wie Griff, Weichheit, Narbenbeschaffenheit und Fülle. Als Gerbstoff in der Nachgerbung werden beispielsweise Syntane, also wasserlösliche Kondensationsprodukte aus z. B. Naphthalinsulfonsäure und Formaldehyd oder aus Phenolsulfonsäure, Formaldehyd und Harnstoff, ferner Ligninsulfonsäuren und auch Polymere und Copolymere auf Basis von Acrylsäure und anderen ungesättigten polymerisierbaren Carbonsäuren in der Regel in Kombination mit den vorgenannten Syntanen, eingesetzt.

So wird z. B. in der US-A 2 205 882 (1) und der US-A 2 205 883 (2) die Verwendung von Polyacrylsäure, von Copolymeren aus Acryl- und Methacrylsäure, von Styrol-Maleinsäureanhydrid-Copolymeren, von Polymethacrylsäure, teilweise hydrolysiertem Polymethylmethacrylat sowie von Copolymeren der Methacrylsäure mit Styrol bzw. Methylmethacrylat zum Gerben von Leder beschrieben. Nachteile dieser Produkte sind, daß sie im allgemeinen die Färbung stark aufhellen und bei zu hoher Einsatzmenge zu einem gummiartigen Griff des Leders führen.

Zur Herstellung von Leder und Pelzen mit einem feinen Narben und gleichmäßiger Anfärbung werden in der GB-A 2 074 173 (3) und der GB-A 2 137 654 (4) Terpolymere, bestehend aus stickstoffhaltigen (Meth)Acrylsäureestern, (Meth)Acrylsäureestern und geringen Mengen (Meth)Acrylsäure, als Gerbstoffe beschrieben. Diese können zur Verringerung der Klebrigkeit auch auf wasserlösliche Proteine oder Polysaccharide gepfropft sein.

Aus der EP-A 441 197 (5) sind Pfropfcopolymerisate von Monosacchariden, Oligosacchariden, Polysacchariden und modifizierten Polysacchariden mit Monomermischungen aus monoethylenisch ungesättigten Carbonsäuren oder deren Anhydriden und gegebenenfalls weiteren ethylenisch ungesättigten Monomeren bekannt. Diese Pfropfcopolymerisate werden als Zusätze zu Wasch- und Reinigungsmitteln empfohlen.

In der Literaturstelle Chem. Abstr. 94, 192926s (1981) (6) werden wasserabsorbierende Pfropfcopolymerisate aus Polysacchariden und Acrylsäure oder Acrylsäurederivaten beschrieben.

In der Literaturstelle Journal of the American Leather Chemists Association 85, S. 425-430 (1990) (7) wird ein neues Acrylsäure-Syntan als Nachgerbungsmittel für Chromleder empfohlen. Dieses Syntan wird durch Pfropfpolymerisation von Acrylsäure und Methacrylsäure auf eine Mischung aus sulfatiertem Fischöl und Alginsäure hergestellt.

Die genannten Mittel des Standes der Technik weisen eine Reihe von Nachteilen auf. Insbesondere hellen sie die Färbung der so hergestellten Leder und Pelze zu sehr auf. Darüber hinaus führen sie zu einer schlechten Lichtechtheit und Wärmeresistenz. Weiterhin können sie dem Leder einen unerwünschten gummiartigen Griff verleihen.

Aufgabe der vorliegenden Erfindung war es daher, der Lederindustrie Gerbstoffe für die Leder- und Pelzherstellung zur Verfügung zu stellen, die die genannten Nachteile nicht mehr aufweisen.

Demgemäß wurde die Verwendung von wasserlöslichen Pfropfpolymerisaten von Monosacchariden, Oligosacchariden, Polysacchariden und deren Derivaten, erhältlich durch radikalisch initiierte Polymerisation
A) eines Monomeren oder einer Monomerenmischung aus
   (a) 20 bis 100 Gew.-% Acrylsäure oder Methacrylsäure oder einer Mischung hieraus, deren Alkalimetall-, Erdalkalimetall oder Ammoniumsalzen,
   (b) 0 bis 80 Gew.-% anderen monoethylenisch ungesättigten Monomeren, die mit den Monomeren (a) copolymerisierbar sind, und
   (c) 0 bis 5 Gew.-% mindestens 2 ethylenisch ungesättigte, nicht konjugierte Doppelbindungen im Molekül aufweisenden Monomeren
   in Gegenwart von
B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- oder Polysacchariden oder Mischungen der genannten Verbindungen
im Gewichtsverhältnis A : B von (95 bis 20) : (5 bis 80), als Gerbstoffe zum Alleingerben, Vorgerben und Mitgerben von Blößen und Fellblößen und zum Nachgerben von Leder und Fell gefunden.

Die wasserlöslichen Pfropfpolymerisate sind durch Homo- oder Copolymerisation der Monomeren A in Gegenwart der Naturstoffe B erhältlich.

Als Monomere A der Gruppe (a) kommen (Meth)Acrylsäure sowie deren Alkalimetall-, Erdalkalimetall- oder Ammoniumsalze in Betracht. Auch Mischungen hieraus können zum Einsatz kommen. Diese Salze sind beispielsweise aus der (Meth)Acrylsäure erhältlich, wenn man die Säure in wäßriger Lösung mit Natronlauge, Kalilauge, Lithiumhydroxidlösung, Magnesiumnydroxidlösung, Ammoniak, Aminen oder Alkanolaminen neutralisiert.

Die Monomeren A der Gruppe (a) können gegebenenfalls zusammen mit anderen monoethylenisch ungesättigten Monomeren (b), die mit den Monomeren (a) copolymerisierbar sind, der Pfropfcopolymerisation unterworfen werden. Der Anteil der Monomeren (a) in der Monomerenmischung A beträgt dann 20 bis 100 Gew.-%, vorzugsweise 40 bis 100 Gew.-%, während die Monomeren (b) bis zu 80 Gew.-%, vorzugsweise bis zu 60 Gew.-%, darin anwesend sein können.

Zu den Monomeren A der Gruppe (b), die bei der Pfropfpolymerisation eingesetzt werden, gehören beispielsweise Crotonsäure, Maleinsäure, Maleinsäureanhydrid, Fumarsäure, Citraconsäure, Citraconsäureanhydrid, C₁- bis C₈-Alkyl- und Hydroxyalkylester der Acrylsäure, Methacrylsäure oder Crotonsäure und Mono- oder Di-C₁- bis C₈-alkyl- oder -hydroryalkylester der Maleinsäure, Fumarsäure oder Citraconsäure, z. B. Methylacrylat, Ethylacrylat, n-Butylacrylat, Methylmethacrylat, Maleinsäuremonomethylester, Maleinsäuredimethylester, Maleinsäuremonoethylester, Maleinsäurediethylester, β-Hydroxyethylacrylat, β- und γ-Hydroxyropylacrylat, δ-Hydroxybutylacrylat, β-Hydroxyethylmethacrylat und β- und γ-Hydroxyropylmethacrylat.

Außerdem kommen die Amide und N-substituierten Alkylamide der unter (a) angegebenen Verbindungen als Monomere A der Gruppe (b) in Betracht, z. B. Acrylamid, Methacrylamid, N-Alkyl(meth)acrylamide mit 1 bis 18 C-Atomen in der Alkylgruppe, wie beispielsweise N-Methylacrylamid, N,N-Dimethylacrylamid, N-tert.-Butylacrylamid, N-Octadecylacrylamid, Dimethylaminopropylmethacrylamid und Acrylamidoglykolsäure. Ebenso eignen sich als Monomere (b) Alkylaminoalkyl(meth)acrylate, z. B. β-(Dimethylamino)ethylacrylat, β-(Dimethylamino)ethylmethacrylat, β-(Diethylamino)ethylacrylat, β-(Diethylamino)ethylmethacrylat, γ-(Diethylamino)propylacrylat und γ-(Diethylamino)propylmethacrylat.

Außerdem eignen sich als Monomere A der Gruppe (b) Sulfogruppen enthaltende Monomere, wie beispielsweise Vinylsulfonsäure, Allylsulfonsäure, Methallylsulfonsäure, Styrolsulfonsäuren, Acrylsäure-3-sulfopropylester, Methacrylsäure-3-sulfopropylester und Acrylamidopropansulfonsäure sowie Phosphonsäuregruppen enthaltende Monomere, wie beispielsweise Vinylphosphonsäure, Allylphosphonsäure und Acrylamidomethylpropanphosphonsäure.

Zu dieser Gruppe (b) der Monomeren A gehören außerdem N-Vinylpyrrolidon, N-Vinylcaprolactam, N-Vinylformamid, N-Vinyl-N-methylformamid, 1-Vinylimidazol, 1-Vinyl-2-methylimidazol, Vinylacetat und Vinylpropionat, Acrylnitril und Methacrylnitril, Acrolein und Methacrolein, Crotonaldehyd sowie deren Acetale.

Als Monomere A der Gruppe (b) eignen sich außerdem Ester von alkoxylierten C₁- bis C₁₈-Alkoholen, die mit 2 bis 50 Mol Ethylenoxid, Propylenoxid, Butylenoxid oder Mischungen davon umgesetzt sind, mit den monoethylenisch ungesättigten Carbonsäuren der Gruppe (a), z. B. die Ester der Acrylsäure oder Methacrylsäure mit einem C_{13/15}-Alkohol, der mit unterschiedlichen Mengen Ethylenoxid zur Reaktion gebracht wurde, z. B. 3 Mol, 5 Mol, 7 Mol, 10 Mol oder 30 Mol Ethylenoxid.

Außerdem kommen als Monomere A der Gruppe (b) Vinylaromaten wie Styrol und α-Methylstyrol sowie C₁- bis C₁₂-Olefine, z. B. Ethylen, Propylen, 1-Buten, 2-Buten oder Butadien, in Betracht.

Außerdem kommen als Monomere A der Gruppe (b) N-mono- oder N,N-disubstituierte Amide von monoethylenisch ungesättigten C₃- bis C₈-Carbonsäuren in Betracht, wobei der Amidstickstoff als Substituenten polyoxalkylierte C₂- bis C₂₈-Alkanole, insbesondere C₂- bis C₁₈-Alkanole, welche mit 2 bis 100, insbesondere 3 bis 20 mol Ethylenoxid, Propylenoxid und/oder Butylenoxid umgesetzt worden sind, trägt. Beispiele solcher Verbindungen sind H₂C=CH-CO-NH-CH₂CH₂-O(C₂H₄O)ₙ-H,
H₂C=CH-CO-N[CH₂CH₂-O-(C₂H₄O)ₙ-H]₂,
H₂C=C(CH₃)-CO-NH-(CH₂)₄-O-(C₂H₄O)ₙ-H,
H₂C=C(CH₃)-CO-NH-CH₂CH₂O-(C₃H₆O)ₙ-H und
H₂C=CH-CO-NH-(CH₂)₁₈-O-(C₂H₄O)ₙ-H (n=3 bis 20).

Die basischen Monomeren werden vorzugsweise in Form der Salze mit Mineralsäuren, z. B. Salzsäure, Schwefelsäure oder Salpetersäure, oder in quaternierter Form eingesetzt. Geeignete Quaternierungsmittel sind beispielsweise Dimethylsulfat, Diethylsulfat, Methylchlorid, Ethylchlorid oder Benzylchlorid. Die Carbonsäuren werden in Form der freien Säuren sowie als Alkalimetall-, Erdalkalimetall- oder als Ammoniumsalze oder als Mischungen hieraus eingesetzt.

Als bevorzugte Komponenten (b) der Monomerenmischung A setzt man zur Herstellung der Pfropfpolymerisate Crotonsäure, Maleinsäure, Malelnsäureanhydrid, Fumarsäure, Citraconsäure, Citraconsäureanhydrid, C₁- bis C₈-, insbesondere C₁- bis C₄-Alkyl- oder Hydroxyalkylester der Acrylsäure, Methacrylsäure oder Crotonsäure, Mono- oder Di-C₁- bis C₈-, insbesondere C₁- bis C₄-alkyl- oder -hydroryalkylester der Maleinsäure, Fumarsäure oder Citraconsäure, Acrylamid, Methacrylamid, Methacrolein, Acrylamidomethylpropansulfonsäure, N-Vinylimidazol oder eine Mischung hieraus ein.

Eine weitere Modifizierung der Pfropfpolymerisate kann dadurch erreicht werden, daß man die Pfropfpolymerisation in Gegenwart von Monomeren A der Gruppe (c) durchführt. Die Monomerenmischungen enthalten in diesem Fall bis zu 5 Gew.-% eines mindestens zwei ethylenisch ungesättigte, nicht konjugierte Doppelbindungen im Molekül aufweisenden Monomers. Diese Verbindungen werden üblicherweise bei Copolymerisationen als Vernetzer verwendet. Sie können den zur Copolymerisation eingesetzten Monomeren der Gruppe (a) oder den Monomermischungen aus (a) und (b) zugesetzt werden. Im Falle ihres Einsatzes beträgt die bevorzugt verwendete Menge an Monomeren (c) 0,05 bis 2 Gew.-%. Die Mitverwendung der Monomeren A der Gruppe (c) während der Copolymerisation bewirkt eine Erhöhung der K-Werte der Copolymerisate.

Geeignete Verbindungen (c) sind beispielsweise Methylenbisacrylamid, Ester von Acrylsäure und Methacrylsäure mit mehrwertigen Alkoholen, z. B. Glykoldiacrylat, Glycerintriacrylat, Ethylenglykoldimethacrylat, Glycerintrimethacrylat sowie mindestens zweifach mit Acrylsäure oder Methacrylsäure veresterte Polyole wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, insbesondere Ethylenglykoldiacrylat oder Glykoldiacrylate von Polyethylenglykolen eines Molekulargewichts bis zu 3.000 oder eine Mischung hieraus.

In einer bevorzugten Ausführungsform setzt man zur Herstellung der Pfropfpolymerisate als Monomer A Methacrylsäure oder deren Alkalimetall-, Erdalkalimetall- oder Ammoniumsalze allein oder als Monomerenmischung A eine Mischung aus mindestens 80 Gew.-% Methacrylsäure oder deren Alkalimetall-, Erdalkalimetall- oder Ammoniumsalzen und den Monomeren (b) ein.

Die Polymerisation der Monomeren A erfolgt in Gegenwart von Naturstoffen auf Basis von Polysacchariden, Oligosacchariden, Monosacchariden und deren Derivaten. Die Naturstoffe sind z. B. Saccharide pflanzlichen oder tierischen Ursprungs oder Produkte des Stoffwechsels von Mikroorganismen sowie deren Abbau- und Modifizierungsprodukte, die bereits in Wasser oder Alkalien dispergierbar oder löslich sind oder während der Polymerisation der Monomeren A direkt oder in teilweiser oder völlig mit Alkalien, Ammoniak oder Aminen neutralisierter Form dispergierbar oder löslich werden.

Es sind dies beispielsweise Pektin, Algin, Chitin, Chitosan, Heparin, Carrageenan, Agar, Gummiaräbicum, Tragant, Karaya-Gummi, Ghatti-Gummi, Johannisbrotkornmehl, Guar-Gummi, Tara-Gummi, Inulin, Xanthan, Dextran, Nigeran und Pentosane wie Xylan und Araban, deren Hauptbestandteile aus D-Glucuronsäure, D-Galakturonsäure, D-Galakturonsäuremethylester, D-Mannuronsäure, L-Rhamnose, D-Xylose, L-Fucose, D-Mannose, D-Fructose und D-Glucose, 2-Amino-2-desoxy-D-glukose und 2-Amino-2-desoxy-D-galaktose sowie deren N-Acetylderivaten, bestehen.

Vom wirtschaftlichen Standpunkt aus gesehen verwendet man als Polysaccharide der Komponente B bei der Pfropfpolymerisation vorzugsweise Stärke, thermisch und/oder mechanisch behandelte Stärke, oxidativ, hydrolytisch oder enzymatisch abgebaute Stärken sowie chemisch modifizierte Stärken und chemisch modifizierte Monosaccharide und Oligosaccharide. Prinzipiell sind alle Stärken geeignet. Bevorzugt werden jedoch Stärken aus Mais, Weizen, Reis, Tapioka und insbesondere Stärke aus Kartoffeln. Die Stärken sind praktisch nicht in Wasser löslich und können in bekannter Weise durch thermische und/oder mechanische Behandlung oder durch einen enzymatischen oder einen säurekatalysierten Abbau in eine wasserlösliche Form übergeführt werden. Als Komponente B eignen sich auch oxidativ abgebaute Stärken. Als Starkeabbauprodukte, die entweder durch oxidativen, hydrolytischen oder enzymatischen Abbau von Stärke erhältlich sind, seien beispielsweise folgende Verbindungen genannt: Dextrine, wie Weiß- und Gelbdextrine, Maltodextrine, Glucosesirupe, Maltosesirupe, Hydrolysate mit hohem Gehalt an D-Glucose, Stärkeverzuckerungsprodukte sowie Maltose und D-Glucose und deren Isomerisierungsprodukt Fruktose. Als Komponente B eignen sich selbstverständlich auch Mono- und Oligosaccharide, wie Galaktose, Mannose, Ribose, Saccharose, Raffinose, Laktose und Trehalose sowie Abbauprodukte der Cellulose, beispielsweise Cellubiose und ihre Oligomeren.

Als Komponente B kommen ebenso oxidierte Stärken, wie z. B. Dialdehydstärke und oxidierte Stärkeabbauprodukte in Betracht, wie beispielsweise Gluconsäure, Glucarsäure und Glucuronsäure. Solche Verbindungen werden beispielsweise durch Oxidation von Stärke mit Perjodat, Chromsäure, Wasserstoffperoxid, Stickstoffdioxid, Stickstofftetroxid, Salpetersäure oder Hypochlorit erhalten.

Als Komponente B eignen sich außerdem chemisch modifizierte Polysaccharide, insbesondere chemisch modifizierte Stärken, z. B. mit Säuren zu Estern und mit Alkoholen zu Ethern umgesetzte Stärken und Stärkeabbauprodukte. Die Veresterung dieser Stoffe ist sowohl mit anorganischen als auch mit organischen Säuren, deren Anhydriden oder Chloriden möglich. Bei direkter Veresterung führt das freigesetzte Wasser zu einer säurekatalytisierten Spaltung glykosidischer Bindungen. Von besonderem technischen Interesse sind phosphatierte und acetylierte Stärken und Stärkeabbauprodukte. Die gängiste Methode zur Veretherung von Stärke ist die Behandlung der Stärke und der Stärkeabbauprodukte mit organischen Halogenverbindungen, Epoxiden oder Sulfaten in wäßriger alkalischer Lösung. Stärkeether sind beispielsweise die Alkylether, Hydroxyalkylether, Carboxyalkylether und Allylether von Stärke. Unter chemisch modifizierte Stärken gemäß Komponente B sollen auch kationisch modifizierte Stärken verstanden werden, z. B. mit 2,3-Epoxipropyltrimethylammoniumchlorid umgesetzte Stärken wie sie in der US-A 3 649 616 beschrieben sind.

Zu chemisch modifizierten Polysacchariden gehören beispielsweise auch Carboxyethylcellulose, Hydroxyethylcellulose, Hydroxyropylcellulose, Carboxyethylhydroxyethylcellulose, Sulfoethylcellulose, Carboxyethylsulfoethylcellulose, Hydroxyropylsulfoethylcellulose, Hydroxyethylsulfoethylcellulose, Methylsulfoethylcellulose und Ethylsulfoethylcellulose.

Als Komponente B eignen sich auch chemisch modifizierte abgebaute Stärken, beispielsweise Hydrierungsprodukte von Stärkehydrolysaten, wie Sorbit und Mannit, Maltit und hydrierte Glucosesirupe oder oxidierte hydrolytisch abgebaute oder enzymatisch abgebaute Stärken.

Ebenfalls geeignet sind die Produkte der sauer katalysierten oder enzymatischen Umglykosidierung oder Glykosidierung, wie z. B. Methylglukosid.

Besonders bevorzugt werden als Komponente B hydrolytisch abgebaute Stärken mit einem hohen Anteil an Monosacchariden und reine Monosaccharide.

Zur Herstellung der Pfropfpolymerisate werden die Monomeren A in Gegenwart von Verbindungen der Saccharid-Komponente B zweckmäßigerweise radikalisch initiiert polymerisiert. In einigen Fällen kann es für die Wirkung des entstehenden Pfropfpolymerisates günstig sein, zwei oder mehrere der unter B angegebenen Verbindungen einzusetzen, z. B. Mischungen aus säurekatalytisch oder enzymatisch abgebauten Stärken und Gluconsäure, Mischungen aus einem Monosaccharid und einem Oligosaccharid, Mischungen aus einer enzymatisch abgebauten Stärke und einem Monosaccharid oder Mischungen aus Glukose und Saccharose oder Mannose.

Die Polymerisation kann in Gegenwart oder auch in Abwesenheit von inerten Lösungsmitteln oder inerten Verdünnungsmitteln durchgeführt werden. Da die Polymerisation in Abwesenheit von inerten Lösungs- oder Verdünnungsmitteln in manchen Fällen zu uneinheitlichen Pfropfpolymerisaten führt, ist die Pfropfpolymerisation in einem inerten Lösungs- oder Verdünnungsmittel bevorzugt. Geeignet sind beispielsweise solche inerten Verdünnungsmittel, in denen die unter B angegebenen Verbindungen suspendiert werden können und die die Monomeren A lösen. In diesen Fällen liegen die Pfropfpolymerisate nach der Polymerisation in suspendierter Form vor und können leicht durch Filtration in fester Form isoliert werden.

Geeignete inerte Verdünnungsmittel sind beispielsweise Toluol, o-, m-, p-Xylol und Isomerengemische hieraus, Ethylbenzol, aliphatische Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan.

Bei der oben beschriebenen Arbeitsweise, bei der die Komponente B in einem inerten Verdünnungsmittel suspendiert wird, setzt man vorzugsweise wasserfreie Verbindungen der Komponente B ein und verwendet aus der Gruppe (b) der Monomeren A bevorzugt Anhydride von Dicarbonsäuren. Eine bevorzugte Art der Herstellung der Pfropfpolymerisate ist die Lösungspolymerisation, wobei die Saccharin-Komponente B, die Monomeren A und das gebildete Pfropfcopolymerisat zumindest dispergiert, in vielen Fällen auch in gelöster Form vorliegen. Für die Lösungspolymerisation eignen sich beispielsweise inerte Lösungsmittel wie Methanol, Ethanol, Isopropanol, n-Propanol, n-Butanol, sek.-Butanol, Tetrahydrofuran, Dioxan, sowie Mischungen hieraus.

Die Polymerisation kann kontinuierlich oder diskontinuierlich durchgeführt werden. Die Komponenten A und B können, wie bereits oben erwähnt, auch in Abwesenheit von inerten Verdünnungs- oder Lösungsmitteln polymerisiert werden. Hierfür bietet sich insbesondere die kontinuierliche Polymerisation bei Temperaturen von 160 bis 250°C an. Gegebenenfalls ist es hierbei möglich, in Abwesenheit von Polymerisationsinitiatoren zu arbeiten. Vorzugsweise setzt man jedoch auch hierbei solche Katalysatoren ein, die unter den Polymerisationsbedingungen Radikale bilden, z. B. anorganische und organische Peroxide, Persulfate, Azoverbindungen und sogenannte Redoxkatalysatoren.

Die beschriebenen wasserlöslichen Pfropfpolymerisate werden im allgemeinen unter Mitverwendung von radikalbildenden Initiatoren hergestellt. Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende fuhrt, so ist es zweckmäßig, mit mindesten zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich.

Für die im folgenden angegebenen Temperaturbereiche kann man in vorteilhafter Weise die dort aufgeführten Initiatoren verwenden:
Temperatur: 40 bis 60°C:
Acetylcyclohexansulfonylperoxid, Diacetylperoxydicarbonat, Dicyclohexylperoxydicarbonat, Di-2-ethylhexyperoxydicarbonat, tert.-Butylperneodecanoat, 2,2'-Azobis-(4-methoxy-2,4-dimethylvaleronitril), 2,2'-Azobis-(2-methylN-phenylpropionamidin)dihydrochlorid, 2,2'-Azobis-(2-methylpropionamidin)dihydrochlorid;
Temperatur: 60 bis 80°C:
tert.-Butylperpivalat, Dioctanoylperoxid, Dilauroylperoxid, 2,2'-Azobis-(2,4-dimethylvaleronitril);
Temperatur: 80 bis 100°C:
Dibenzoylperoxid, tert.-Butylper-2-ethylhexanoat, tert.-Butylpermaleinat, 2,2'-Azobis-(isobutylronitril), Dimethyl-2,2'-azobisisobutyrat, Natriumpersulfat, Kaliumpersulfat, Ammoniumpersulfat;
Temperatur: 100 bis 120°C
Bis-(tert.-butylperoxid)-cyclohexan, tert.-Butylperoxyisopropylcarbonat, tert.-Butylperacetat, Wasserstoffperoxid;
Temperatur: 120 bis 140°C:
2,2-Bis-(tert.-butylperoxy)-butan, Dicumylperoxid, Di-tert.-amylperoxid, Di-tert.-butylperoxid;
Temperatur: >140°C:
p-Methanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Cer-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden.

Bezogen auf die bei der Polymerisation eingesetzten Monomeren A verwendet man 0,01 bis 20, vorzugsweise 0,05 bis 15 Gew.-% eines Polymerisationsinitiators oder einer Mischung mehrerer Polymerisationsinitiatoren. Als Redoxkomponenten setzt man 0,01 bis 30 Gew.-% der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Polymerisation der Monomeren A kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Pfropfpolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren A.

Um farblose oder nur wenig gefärbte Pfropfpolymerisate aus den Komponenten A und B herzustellen, wird die Polymerisation zweckmäßigerweise in Gegenwart von wasserlöslichen Phosphorverbindungen durchgeführt, in denen der Phosphor eine Oxidationszahl von 1 bis 4 hat, deren wasserlöslichen Alkalimetall- oder Ammoniumsalzen, wasserlöslichen PO(OH)₂-Gruppen enthaltenden Verbindungen und/oder deren wasserlöslichen Salzen. Vorzugsweise verwendet man phosphorige und hypophosphorige Säure. Die in Betracht kommenden Phosphorverbindungen werden zur Verringerung der Verfärbung der Pfropfpolymerisate in Mengen von 0,01 bis 5 Gew.-%, bezogen auf die eingesetzten Monomeren A, angewendet. Die in Betracht kommenden Phosphorverbindungen sind in der EP-A 175 317 beschrieben.

Die Polymerisation der Komponenten A und B erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich polymerisieren, indem man das Reaktionsgemisch auf die Polymerisationstemperatur erhitzt. Diese Temperatur liegt in dem Bereich von 40 bis 180°C. Bei dieser Methode erhält man jedoch Pfropfpolymerisate, die in sich etwas uneinheitlich sind und daher ihre optimale Wirksamkeit nicht erreichen.

Um den Verlauf der Polymerisationsreaktion besser kontrollieren zu können, gibt man daher die Monomeren A nach dem Anspringen der Polymerisation dem polymerisierenden Gemisch kontinuierlich oder absatzweise in dem Maße zu, daß die Pfropfpolymerisation in dem gewünschten Temperaturbereich gut kontrollierbar ist. Bevorzugt ist eine Art der Zugabe der Monomeren A, bei der man im Polymerisationsreaktor zunächst die Komponente B oder zumindest einen Teil der Komponente B vorlegt und darin unter Rühren auf die gewünschte Polymerisationstemperatur erhitzt. Sobald diese Temperatur erreicht ist, fügt man dazu über einen Zeitraum von etwa 1 bis 10, vorzugsweise 2 bis 8 Stunden, die Monomeren A sowie den Initiator und gegebenenfalls einen Regler zu. Eine derartige Vorgehensweise wird beispielsweise beim Polymerisieren der Komponenten A und B in einem inerten Verdünnungsmittel, in dem die Komponente B suspendiert ist, sowie auch bei der in Lösung durchgeführten Pfropfpolymerisation in vorteilhafter Weise angewendet.

Die Pfropfpolymerisate werden vorzugsweise in Suspensions- oder Lösungspolymerisation der Komponenten A und B in wäßrigem Medium hergestellt, wobei die Lösungspolymerisation in Wasser besonders bevorzugt ist. Bei der Lösungspolymerisation in wäßrigem Medium geht man beispielsweise so vor, daß man die Komponente B in wäßrigem Medium vorlegt, auf die gewünschte Polymerisationstemperatur erhitzt und die Monomeren A kontinuierlich oder absatzweise dem polymerisierenden Reaktionsgemisch zufügt. Der pH-Wert des Ansatzes kann sich im Bereich zwischen 0,5 und 14 bewegen. Bei einem niedrigen pH-Wert wird die (Meth)Acrylsäure (a) in der Säureform und bei einem hohen pH-Wert in der Salzform eingesetzt.

Besonders wenig gefärbte und besonders gut wirksame Polymerisate werden erhalten bei der Polymerisation im pH-Bereich von 4 bis 8. Dies kann so erfolgen, daß man die Säuregruppen vor der Polymerisation auf den gewünschten pH-Wert einstellt, oder daß man während der Polymerisation durch stetige Zugabe von Neutralisationsmittel den pH-Wert konstant hält. Als Neutralisationsmittel sind besonders geeignet Natronlauge, Kalilauge, Ammoniak, Ethanolamin, Diethanolamin oder Triethanolamin. Besonders bevorzugt bei der Lösungspolymerisation in Wasser sind wasserlösliche Initiatoren bzw. Initiatorsysteme. Bei einer besonders günstigen Herstellungsweise wird im Reaktor nur Wasser vorgelegt und die Komponente A, gegebenenfalls in teil- oder vollneutralisierter Form, und B werden bei der gewählten Polymerisationstemperatur innerhalb von 0,5 bis 10 Stunden absatzweise oder kontinuierlich zudosiert.

Bei der Herstellung von Pfropfpolymerisaten, die als Komponente (b) der Monomeren A monoethylenisch ungesättigte Dicarbonsäuren enthalten, ist es wichtig, besonders zur Erzielung von Pfropfpolymerisaten mit geringem Anteil an nicht polymerisierter Dicarbonsäure, daß man den Neutralisationsgrad der Monomeren während der Copolymerisation kontrolliert. Er soll während der Pfropfpolymerisation 20 bis 80, vorzugsweise 30 bis 70 % betragen. Man kann hierzu beispielsweise die Monomeren A der Gruppe (a) und (b) partiell neutralisieren, so daß ihr Neutralisationsgrad jeweils in dem angegebenen Bereich liegt. Es ist aber auch möglich, die im Reaktor vorgelegten monomeren Dicarbonsäuren der Gruppe (b) vollständig oder zu ca. 90 % zu neutralisieren und die Monomeren der Gruppe (a) in nicht neutralisierter Form zuzugeben, so daß sich der Gesamtneutralisationsgrad der Monomeren (a) und (b) während der Polymerisation von zunächst ca. 100 % oder ca. 90 % auf Werte im Bereich von 20 bis 80 % erniedrigt. Um einen bestimmten Neutralisationsgrad der Monomeren (a) und (b) aufrecht zu erhalten, kann man während der Copolymerisation eine Base, z. B. Natronlauge, Kalilauge, Ammoniak oder Ethanolamin, zufügen. In Abhängigkeit von der Zusammensetzung der Pfropfpolymerisate wird die Hauptmenge, d. h. 60 bis 80 % der Monomeren (a) und (b), bei einem Neutralisationsgrad von 20 bis 80 % polymerisiert.

Wie bereits erwähnt, können auch Polysaccharide in wäßriger Suspension der Pfropfpolymerisation unterworfen werden. Vorzugsweise stellt man jedoch Pfropfpolymerisate aus Polysacchariden dadurch her, daß man ein wasserunlösliches Polysaccharid zunächst in wäßriger Suspension unter Zusatz von Enzymen und/oder Säuren in eine wasserlösliche Form überführt und die dabei erhältliche wäßrige Lösung des abgebauten Polysaccharids der Pfropfpolymerisation unterwirft. Hierbei wird zunächst ein wasserunlösliches Polysaccharid, wie beispielsweise Kartoffelstärke, in Wasser suspendiert und abgebaut. Dieser Abbau kann unter der Einwirkung von Enzymen, z. B. α- oder β-Amylase oder von entzweigenden Enzymen wie z.B. Pullulanase, oder durch Einwirkung von anorganischen oder organischen Säuren in bekannter Weise vorgenommen werden. Als anorganische Säuren eignen sich beispielsweise Phosphorsäure, Schwefelsäure, Salzsäure und Salpetersäure. Geeignete organische Säuren sind beispielsweise gesättigte oder ungesättigte Carbonsäuren, z. B. Ameisensäure, Essigsäure, Propionsäure, Acrylsäure, Methacrylsäure, Maleinsäure, Itaconsäure, p-Toluolsulfonsäure und Benzolsulfonsäure.

Der enzymatische Abbau von Stärke wird in dem Temperaturbereich von 30 bis 120°C durchgeführt, während man den hydrolytischen Abbau der Stärke bei Temperaturen von 50 bis 150°C vornimmt. Für den hydrolytischen Abbau benötigt man etwa 5 Minuten bis 10 Stunden, wobei der Grad des hydrolytischen Abbaus der Stärke von der gewählten Temperatur, dem pH-Wert und der Zeit abhängt. Nähere Angaben über den Abbau von Stärke können der Fachliteratur entnommen werden, vgl. z. B. Günther Tegge, Stärke und Stärkederivate, Behr's Verlag, Hamburg 1984. In einigen Fällen hat es sich als vorteilhaft erwiesen, bereits bei dem enzymatischen oder hydrolytischen Abbau der Stärke mindestens eine der Phosphorverbindungen einzusetzen, die gemäß der Lehre der EP-A 175 317 zu Polymerisaten führen, die nicht oder nur sehr wenig gefärbt sind.

Bei der Pfropfpolymerisation liegen die Temperaturen üblicherweise in dem Bereich von 40 bis 180, vorzugsweise 60 bis 150°C. Sobald die Temperatur bei der Polymerisation oberhalb der Siedepunkte des inerten Verdünnungs- oder Lösungsmittels oder der Monomeren A liegt, wird die Polymerisation unter Druck durchgeführt. Die Konzentration der Komponenten A und B beträgt bei der Polymerisation in Gegenwart von inerten Lösungs- oder inerten Verdünnungsmitteln 10 bis 80, vorzugsweise 20 bis 70 Gew.-%.

Die Herstellung der Pfropfpolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind. Insbesondere bei der Pfropfpolymerisation in Abwesenheit von Verdünnungsmitteln kann es vorteilhaft sein, die Polymerisation in Knetern durchzuführen. Ebenso kann es notwendig sein, in einem Kneter zu polymerisieren, wenn man bei hohen Konzentrationen arbeitet oder wenn die Naturstoffe hochmolekular sind und zunächst stark quellen.

Man setzt die Komponenten A und B im Gewichtsverhältnis von (95 bis 20) : (5 bis 80), vorzugsweise von (90 bis 40) : (10 bis 60) ein.

Man erhält wasserlösliche Pfropfpolymerisate mit K-Werten nach Fikentscher von 8 bis 250 (gemessen an 1 gew.-%igen wäßrigen Lösungen der Polymerisate bei pH 7 und 25°C). Die bevorzugten K-Werte für die erfindungsgemäße Anwendung liegen zwischen 10 und 100.

Die nach den oben angegebenen Verfahren herstellbaren Pfropfpolymerisate sind farblose bis bräunlich gefärbte Produkte. Sie liegen beim Polymerisieren in wäßrigem Medium als Dispersionen oder Polymerlösungen vor. In Abhängigkeit von der jeweiligen Zusammensetzung oder Konzentration der Pfropfpolymerisate handelt es sich dabei um niedrigviskose bis pastöse wäßrige Lösungen oder Dispersionen. Die oben beschriebenen Pfropfpolymerisate sind auf Grund des Naturstoffanteils gegenüber den bisher verwendeten Polymerisaten auf Basis ethylenisch ungesättigter Monomerer besser biologisch abbaubar, mindestens jedoch aus dem Abwasser von Kläranlagen mit dem Klärschlamm eliminierbar.

Die so erhältlichen wäßrigen Pfropfpolymerisatlösungen eignen sich in hervorragender Weise als Gerbstoffe bei der Leder- und Pelzherstellung.

So können die erfindungsgemäß verwendeten Pfropfpolymerisate zu Alleingerben und Vorgerben von Blößen und Fellblößen in wäßriger Flotte verwendet werden. Besonders vorteilhaft für diese Anwendungsgebiete sind Pfropfpolymerisate, die aus Methacrylsäure oder deren Salzen allein oder aus einer Monomerenmischung A aus Methacrylsäure oder deren Salzen (a) und Monomeren (b) mit mindestens 80 % (a) aufgebaut sind.

Beim Alleingerben und Vorgerben von Blößen und Fellblößen geht man zweckmäßigerweise so vor, daß die gepickelten Blößen, beispielsweise Rindsblößen mit einer Spaltstärke von 1,5 bis 4 mm, oder Fellblößen, beispielsweise Schaffellblößen, bei einem pH-Wert von 2 bis 7, insbesondere 2,5 bis 4,5, und einer Temperatur von 15 bis 40°C, insbesondere 20 bis 35°C, während eines Zeitraums von 3 bis 20 Stunden mit einer wäßrigen Lösung der erfindungsgemäß verwendeten Pfropfpolymerisate behandelt werden. Die Behandlung erfolgt beispielsweise durch Walken in einem Faß. Die benötigte Menge an erfindungsgemäß verwendeten Pfropfpolymerisaten beträgt normalerweise, bezogen auf das Blößengewicht, 2 bis 30 Gew.-%, insbesondere 5 bis 25 Gew.-%. Die Flottenlänge, d. h. das prozentuale Gewichtsverhältnis der Behandlungsflotte zur Ware, beträgt üblicherweise 30 bis 200 % bei Blößen und 100 bis 2000 % bei Fellblößen, jeweils bezogen auf das Blößengewicht.

Nach erfolgter Behandlung wird das Leder bzw. Fell üblicherweise auf einen pH-Wert von 2 bis 8, insbesondere 3 bis 5, eingestellt, wozu man beispielsweise Magnesiumoxid, Natriumcarbonat, Natriumnydrogencarbonat oder eine organische Säure wie Ameisensäure oder deren Salze verwendet, gegebenenfalls mit weiteren Gerbstoffen behandelt und gegen Ende oder nach Abschluß des Gerbprozesses gewünschtenfalls gefärbt und gefettet.

Weiterhin können die erfindungsgemäß verwendeten Pfropfpolymerisate zum Mitgerben von Blößen und Fellblößen zusammen mit den Gerbstoffen der Hauptgerbung, welche beispielsweise eine Chrom- oder eine Aluminiumgerbung sein kann, verwendet werden. In diesem Fall werden die Arbeitsbedingungen bezüglich pH-Wert, Temperatur und Dauer der Behandlung auf die Anforderungen der Hauptkomponenten der Gerbung eingestellt, das gleiche gilt für die Behandlungsapparatur und die Flottenlänge sowie für die Nachbehandlung. Die benötigte Menge an erfindungsgemäß verwendeten Pfropfpolymerisaten beträgt hierbei normalerweise, bezogen auf das Blößengewicht, 0,1 bis 20 Gew.-%, insbesondere 0,5 bis 15 Gew.-%.

Weiterhin können die erfindungsgemäß verwendeten Pfropfpolymerisate zum Nachgerben von bereits gegerbtem Leder und Fell, beispielsweise Chromleder, in wäßriger Flotte verwendet werden. Hierbei arbeitet man in der Regel so, daß man die gepickelten Blößen und Felle, beispielsweise Rindsblößen mit Spaltstärken von 1,5 bis 4 mm, mit beispielsweise einem üblichen chromhaltigen Gerbstoff wie einem Chrom(III)-Salz, z.B. Chrom(III)-Sulfat, in an sich bekannter Weise gerbt, die so erhaltenen vorgegerbten Häute (bei Chromgerbung "Wet-blues") entsäuert und bei einem pH-Wert von 2 bis 7, insbesondere 2,5 bis 6, und bei Temperaturen von 15 bis 60°C, insbesondere 25 bis 45°C, während eines Zeitraumes von 1 bis 12 Stunden mit einer wäßrigen Lösung der erfindungsgemäß verwendeten Pfropfpolymerisate behandelt. Diese Behandlung erfolgt beispielsweise durch Walken in einem Faß. Die benötigte Menge an erfindungsgemäß verwendeten Pfropfpolymerisaten beträgt normalerweise, bezogen auf das Falzgewicht des Leders, 2 bis 30 Gew.-%, insbesondere 5 bis 25 Gew.-%. Die Flottenlänge beträgt üblicherweise 30 bis 200 % bei Blößen und 100 bis 2000 % bei Fellblößen, jeweils bezogen auf das Falzgewicht des Leders.

Nach und erforderlichenfalls auch vor der Behandlung wird das Leder bzw. Fell üblicherweise auf einen pH-Wert von 3 bis 5 eingestellt, wozu man beispielsweise Magßesiumoxid oder eine organische Säure wie Ameisensäure oder deren Salze verwendet, und gegen Ende oder nach der Behandlung gewünschtenfalls gefärbt und gefettet.

Das derart nachgegerbte Leder oder Fell kann vor der Nachgerbung mit den erfindungsgemäß verwendeten Pfropfpolymerisaten zusätzlich mit anderen Gerbstoffen wie anderen Polymergerbstoffen oder Syntanen behandelt worden sein. Auch können die erfindungsgemäß verwendeten Pfropfpolymerisate gleichzeitig mit derartigen zusätzlichen Gerbemitteln, beispielsweise in der Hauptgerbung, eingesetzt werden.

Als zusätzliche oder gleichzeitig eingesetzte Gerbstoffe kommen alle üblichen Mittel mit Gerbwirkung auf Blößen und Fellblößen in Betracht. Eine umfassende Abhandlung derartiger Gerbstoffe findet sich beispielsweise in Ullmanns Encyklopädie der technischen Chemie, 3. Auflage, 11. Band, Seiten 585 bis 612 (1960). Einzeln zu erwähnende Gerbstoffklassen sind die mineralischen Gerbstoffe, z. B. Chrom-, Aluminium-, Titan- und Zirkonsalze, die synthetischen Gerbstoffe wie die bereits oben genannten Polymergerbstoffe und Syntane und die vegetabilischen (pflanzlichen) Gerbstoffe.

Die mit den erfindungsgemäß verwendeten Pfropfpolymerisaten erzeugten, insbesondere chromvorgegerbten Leder und Felle weisen eine extrem hohe Lichtechtheit und Wärmeresistenz auf und zeichnen sich durch gute Fülle, hohe Weichheit und Festnarbigkeit aus.

Darüber hinaus hellen die erfindungsgemäß verwendeten Pfropfpolymerisate die Färbung nicht oder nur geringfügig auf. Leder und Felle, die mit den erfindungsgemäß verwendeten Pfropfpolymerisaten durch Alleingerbung oder auch beispielsweise durch Nachgerbung von Chromleder hergestellt worden sind, sind daher sehr intensiv und gleichmäßig angefärbt.

Ein besonderer Vorteil der erfindungsgemäß verwendeten Pfropfpolymerisate ist darin zu sehen, daß sie im Gegensatz zu herkömmlichen Syntanen keine gesundheitsgefährdenden unsulfonierten Phenole als Restmonomere enthalten können und im Gegensatz zu herkömmlichen Polymergerbstoffen durch den Einbau von Naturstoffen, nämlich der Saccharid-Komponente B, besser biologisch abbaubar, mindestens jedoch besser aus dem Abwasser von Kläranlagen mit dem Klärschlamm eliminierbar sind.

### Beispiele

Wenn nichts anderes angegeben ist, beziehen sich die Prozentangaben auf das Gewicht.

Die K-Werte der Polymerisate wurden nach H. Fikentscher, Cellulose-Chemie 13, S. 58 - 54 und S. 71 - 74 (1932) bei einer Temperatur von 25°C an 1%igen wäßrigen Polymerlösungen bestimmt.

### Herstellung der Pfropfpolymerisate

### Beispiel 1

In einem beheizbaren Reaktor, der mit Rührer, Rückflußkühler, Thermometer, Zulaufvorrichtungen sowie Stickstoffein- und auslaßvorrichtungen versehen war, wurden 271 g dest. Wasser, 240 g einer 80 %igen wäßrigen Lösung eines Stärkeabbauproduktes, bestehend aus etwa 17 % Dextrose, 15 % Maltose und 68 % Maltotriose und höheren Zuckern, 57,5 g Maleinsäureanhydrid, 0,7 g phosphorige Säure und 2,4 g Natriumdisulfit im schwachen Stickstoffstrom auf 80°C erhitzt und dann wurde der Ansatz mit 84,6 g 50 %iger Natronlauge neutralisiert. Nun wurde auf ca. 100°C bis zum schwachen Sieden erhitzt und innerhalb von 5 Stunden eine Lösung von 160,3 g Acrylsäure in 170 g dest. Wasser und innerhalb von 6 Stunden eine Lösung von 13,7 g 50 %igem Wasserstoffperoxid in 76 g dest. Wasser gleichmäßig unter Siedebedingungen zudosiert. Anschließend wurde noch 1 Stunde bei 100°C nachgerührt und dann der pH-Wert des Ansatzes mit 50 %iger Natronlauge auf 7 eingestellt. Die bräunliche, klare Lösung besaß einen Feststoffgehalt von 38,7 %. Der K-Wert des Polymeren lag bei 26,2.

### Beispiel 2

In einem Reaktor gemäß Beispiel 1 wurden 100 g dest. Wasser im schwachen Stickstoffstrom auf 85°C erhitzt und eine Mischung aus 200,4 g Acrylsäure und 484 g dest. Wasser wurden bei ca. 20°C mit 200 g 50 %iger Natronlauge und 21,6 g N-Vinylimidazol innerhalb von 2 Stunden neutralisiert und eine Lösung aus 198 g Dextrose (Kristallisat mit 1 Mol Wasser) in 200 g dest. Wasser und 65 g 50 %igem Wasserstoffperoxid in 2,5 Stunden bei 85 bis 95°C gleichmäßig zudosiert. Der pH-Wert der Lösung betrug am Ende der Umsetzung 7,3. Anschließend wurde durch Zusetzen von 70 g 50 %iger Natronlauge der pH-Wert auf 8,5 eingestellt. Der Feststoffgehalt der gelblichen Polymerlösung betrug 31 %. Der K-Wert des Polymeren lag bei 35,6.

### Beispiel 3

In einem Reaktor gemäß Versuch 1 wurden 100 g dest. Wasser im schwachen Stickstoffstrom auf 90°C erhitzt und eine Lösung aus 298 g Methacrylsäure, 460 g dest. Wasser und 240 g 50 %iger Natronlauge (die Herstellung dieser Lösung erfolgte bei 20°C durch langsames Zugeben der Natronlauge zu der wäßrigen Methacrylsäurelösung) sowie eine Mischung aus 198 g Dextrose (Kristallisat mit 1 Mol Wasser) in 200 g dest. Wasser und 68 g 50 %igem Wasserstoffperoxid innerhalb von 3 Stunden bei 90 bis 100°C gleichmäßig zudosiert. Anschließend wurde noch 1 Stunde nachgerührt und der pH-Wert mit 74 g 50 %iger Natronlauge auf 9 eingestellt. Der Feststoffgehalt der gelblichen Polymerlösung war 32,8 %, der K-Wert des Polymeren betrug 27,0.

### Beispiel 4

Es wurde wie in Beispiel 3 verfahren mit der Ausnahme, daß anstelle von 68 g 50 %igem Wasserstoffperoxid nur 34 g eingesetzt wurden. Die gelbliche klare Polymerlösung besaß einen Feststoffgehalt von 32,6 % und der K-Wert des Polymeren betrug 34,8.

### Beispiel 5

Es wurde wie in Beispiel 2 verfahren mit der Ausnahme, daß anstelle von Acrylsäure die gleiche Menge Methacrylsäure eingesetzt wurde. Die erhaltene klare, bräunliche Polymerlösung besaß einen Feststoffgehalt von 29,5 %. Der K-Wert des Polymeren war 20,8.

### Beispiel 6

In einem Reaktor gemäß Versuch 1 wurden 200 g dest. Wasser bis zum Sieden erhitzt und innerhalb von 2 Stunden gleichmäßig und synchron 258 g Methacrylsäure, eine Lösung von 140 g Natriumhydroxid in 520 g dest. Wasser, eine Lösung von 240 g 75 %iger Royalglukose (Glukosesirup mit ca. 95 % Dextrose, erhalten durch enzymatischen Abbau von Stärke) in 158 g dest. Wasser und 68 g 50 %iges Wasserstoffperoxid bei 95 bis 100°C zudosiert. Anschließend wurde noch 1 Stunde unter Sieden nachgerührt. Die erhaltene klare, fast farblose Lösung besaß einen Feststoffgehalt von 31,8 % und einen pH-Wert von 7,8. Der K-Wert des Polymeren betrug 31,1.

### Beispiel 7

In einem Reaktor gemäß Versuch 1 wurden 543 g dest. Wasser und 30 g Kartoffelstärke im schwachen Stickstoffstrom zum Sieden erhitzt und innerhalb von 3 Stunden 120 g Methacrolein, innerhalb von 3,5 Stunden 180 g Methacrylsäure und innerhalb von 4 Stunden eine Lösung von 6,9 g Natriumpersulfat in 150 g dest. Wasser gleichmäßig zudosiert. Anschließend wurde noch 1 Stunde nachgerührt und dann der viskosen Dispersion innerhalb von ca. 1 Stunde 167 g 50 %ige Natronlauge zugesetzt und bei 80 bis 90°C weitergerührt, bis das Polymerisat in eine Lösung übergegangen war. Die braune, schwach trübe Lösung war viskos und besaß einen Feststoffgehalt von 29,6 % und einen pH-Wert von 7,5. Der K-Wert des Polymeren betrug 72,5.

### Anwendungstechnische Beispiele

### Beispiele 8 (Alleingerbung)

Gepickelte Rindsblöße der Spaltstärke von 3 mm wurde in 60 % Wasser und 5 % Kochsalz bei 20°C mit Natriumformiat und Natriumbicarbonat auf einen pH-Wert von 4,5 eingestellt. Anschließend wurden 32 % Polymerlösung (≙ 10 % Wirksubstanz), hergestellt nach Versuch 6, im Verhältnis 1 : 1 mit Wasser verdünnt und zu der Rindsblöße gegeben. Nach einer Gerbdauer von 3 Stunden bei 20°C wurde der pH-Wert der Flotte mit Ameisensäure wieder auf 4,5 eingestellt. Danach wurde die Blöße weitere 15 Stunden mit der Gerbflotte behandelt und anschließend kurz gespült. Die Schrumpftemperatur des so erhaltenen Leders lag bei 78°C. Nach Fettung mit 8 % eines handelsüblichen lichtechten Lickers und Fixierung mit 0,4 % Ameisensäure wurde das Leder getrocknet und gestollt. Es besaß neben guter Fülle und einem hohen Weißgrad und ausgezeichnete Wärme- und Lichtechtheiten.

### Vergleichsbeispiel A

Analog Beispiel 8 wurde Rindsblöße mit 10 %, bez. auf den Feststoffgehalt, einer handelsüblichen Polymethacrylsäure zur Alleingerbung eingesetzt. Das damit erhaltene Leder besaß eine Schrumpftemperatur von 72°C und wies nach Fettung und Trocknung einen deutlich geringeren Weißgrad auf.

### Beispiel 9 (Nachgerbung von Chromleder zu Möbelleder)

Ein Rindwetblue der Falzstärke 1,2 mm wurde zunächst mit 300 % Wasser von 30°C gewaschen und anschließend in 100 % Flotte bei 30°C mit Natriumformiat und Natriumcarbonat auf einen pH von 4,5 entsäuert. Nach kurzem Spülen wurde das Leder in 100 % Flotte mit 3 %, bezogen auf das Festprodukt, des nach Beispiel 1 hergestellten Polymeren bei 40°C im Faß nachgegerbt. Nach 90 Min. Walken wurde das Leder erneut gespült und in 100 % Flotte bei 50°C mit 1 % eines üblichen Metallkomplex-Lederfarbstoffes gefärbt, mit 8 % eines handelsüblichen Fettlickers gefettet und mit Ameisensäure auf einen pH von 4,0 eingestellt. Das Leder wurde über Nacht auf einem Bock gelagert, anschließend naß gespannt und getrocknet. Nach Spänen, Stollen und Millen erhielt man ein weiches, gut gefülltes Leder mit intensiver und sehr gleichmäßiger Färbung.

### Beispiel 10 bis 15 (Nachgerbung von Chromleder zu Möbelleder)

Analog Beispiel 9 wurden jeweils 10 %, bezogen auf die Wirksübstanz, der Pfropfpolymeren aus den Versuchen 2 bis 7 zur Nachgerbung von Chromrindleder eingesetzt. In allen Fällen wurden weiche, gut gefüllte Leder mit einem schönen Millnarben erhalten. Darüber hinaus waren die Leder sehr gleichmäßig und intensiv gefärbt.

### Vergleichsbeispiel B (Nachgerbung von Chromleder zu Möbelleder)

Ein handelsübliches Polymer auf Methacrylsäurebasis wurde analog Beispiel 9 zur Nachgerbung eingesetzt. Das damit erhaltene Leder war bei gleicher Farbstoffmenge deutlich heller gefärbt.

### Beispiel 16 (Nachgerbung von Chromleder zu Schuhoberleder)

Ein Rindwetblue der Falzstärke 1,5 mm wurde in üblicher Weise gespült, gewaschen und anschließend in 100 % Flotte mit Natriumformiat und Natriumcarbonat auf einen pH von 4,5 entsäuert. Dann wurde in 100 % neuer Flotte mit 5 %, bezogen auf den Feststoffgehalt, des Pfropfpolymeren aus Beispiel 3 bei 40°C im Faß nachgegerbt. Nach 90 Min. Walken wurde das Leder erneut gespült. Die Färbung erfolgte in 100 % Flotte mit 1 % eines handelsüblichen Lederfarbstoffs bei 50°C. Anschließend wurde mit einem handelsüblichen Fettlicker gefettet und mit Ameisensäure ein pH-Wert von 3,9 eingestellt. Nach kurzem Spülen wurde das Leder ausgereckt, getrocknet und gestollt. Man erhielt ein gut gefärbtes Leder mit ausgezeichneter Fülle und einem enganliegenden glatten Narben, das sich vorzüglich als Schuhoberleder eignete.

### Beispiel 17 (Nachgerbung von Chromleder zu Schuhoberleder)

Die Nachgerbung mit dem nach Beispiel 5 hergestellten Polymeren wurde analog Beispiel 16 durchgeführt. Das erhaltene Leder war noch etwas dunkler als bei Beispiel 16 und der Schnitt vollständig durchgefärbt. Es besaß ebenfalls einen glatten Narben sowie ausgezeichnete Fülle und einen angenehmen Griff.

### Vergleichsbeispiel C (Nachgerbung von Chromleder zu Schuhoberleder)

Analog Beispiel 16 und 17 wurde ein handelsüblicher Nachgerbstoff auf Polymethacrylsäure-Basis eingesetzt. Im Vergleich zu den Beispielen 16 und 17 war das Leder deutlich heller und auch im Schnitt nicht vollständig durchgefärbt.

## Patentansprüche

1. Verwendung von wasserlöslichen Pfropfpolymerisaten von Monosacchariden, Oligosacchariden, Polysacchariden und deren Derivaten, erhältlich durch radikalisch initiierte Polymerisation
A) eines Monomeren oder einer Monomerenmischung aus
(a) 20 bis 100 Gew.-% Acrylsäure oder Methacrylsäure oder einer Mischung hieraus, deren Alkalimetall-, Erdalkalimetall- oder Ammoniumsalzen,
(b) 0 bis 80 Gew.-% anderen monoethylenisch ungesättigten Monomeren, die mit den Monomeren (a) copolymerisierbar sind, und
(c) 0 bis 5 Gew.-% mindestens 2 ethylenisch ungesättigte, nicht konjugierte Doppelbindungen im Molekül aufweisenden Monomeren
in Gegenwart von
B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- oder Polysacchariden oder Mischungen der genannten Verbindungen
im Gewichtsverhältnis A : B von (95 bis 20) : (5 bis 80), als Gerbstoffe zum Alleingerben, Vorgerben und Mitgerben von Blößen und Fellblößen und zum Nachgerben von Leder und Fell.

2. Verwendung von wasserlöslichen Pfropfpolymerisaten als Ledergerbstoffe nach Anspruch 1, wobei zur Herstellung der Pfropfpolymerisate als Komponente (b) der Monomerenmischung A Crotonsäure, Maleinsäure, Maleinsäureanhydrid, Fumarsäure, Citraconsäure, Citraconsäureanhydrid, C₁- bis C₈-Alkyl- oder Hydroxyalkylester der Acrylsäure, Methacrylsäure oder Crotonsäure, Mono- oder Di-C₁- bis C₈-alkyl- oder -hydroxyalkylester der Maleinsäure, Fumarsäure oder Citraconsäure, Acrylamid, Methacrylamid, Methacrolein, Acrylamidomethylpropansulfonsäure, N-Vinylimidazol oder eine Mischung hieraus eingesetzt worden sind.

3. Verwendung von wasserlöslichen Pfropfpolymerisaten als Ledergerbstoffe nach Anspruch 1 oder 2, wobei zur Herstellung der Pfropfpolymerisate als Komponente (c) der Monomerenmischung A Ethylenglykoldiacrylat oder Glykoldiacrylate von Polyethylenglykolen eines Molekulargewichtes bis zu 3.000 oder eine Mischung hieraus eingesetzt worden sind.

4. Verwendung von wasserlöslichen Pfropfpolymerisaten als Ledergerbstoffe nach Anspruch 1, wobei zur Herstellung der Pfropfpolymerisate als Monomer A Methacrylsäure oder deren Alkalimetall-, Erdalkalimetall- oder Ammoniumsalze allein oder als Monomerenmischung A eine Mischung aus mindestens 80 Gew.-% Methacrylsäure oder deren Alkalimetall-, Erdalkalimetall- oder Ammoniumsalzen und den Monomeren (b) eingesetzt worden sind.

5. Verwendung von wasserlöslichen Pfropfpolymerisaten als Ledergerbstoffe nach den Ansprüchen 1 bis 4, wobei zur Herstellung der Pfropfpolymerisate als Saccharid-Komponente B hydrolytisch abgebaute Stärken mit einem hohen Anteil an Monosacchariden oder reine Monosaccharide eingesetzt worden sind.

6. Verfahren zum Alleingerben, Vorgerben und Mitgerben von Blößen und Fellblößen und zum Nachgerben von Leder und Fell, dadurch gekennzeichnet, daß man als Gerbstoffe wasserlösliche Pfropfpolymerisate von Monosacchariden, Oligosacchariden, Polysacchariden und deren Derivaten, erhältlich durch radikalisch initiierte Polymerisation
A) eines Monomeren oder einer Monomerenmischung aus
(a) 20 bis 100 Gew.-% Acrylsäure oder Methacrylsäure oder einer Mischung hieraus, deren Alkalimetall-, Erdalkalimetall- oder Ammoniumsalzen,
(b) 0 bis 80 Gew.-% anderen monoethylenisch ungesättigten Monomeren, die mit den Monomeren (a) copolymerisierbar sind, und
(c) 0 bis 5 Gew.-% mindestens 2 ethylenisch ungesättigte, nicht konjugierte Doppelbindungen im Molekül aufweisenden Monomeren
in Gegenwart von
B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- oder Polysacchariden oder Mischungen der genannten Verbindungen
im Gewichtsverhältnis A : B von (95 bis 20) : (5 bis 80), einsetzt.

## Claims

1. Use of a water-soluble graft polymer of monosaccharides, oligosaccharides, polysaccharides and derivatives thereof, obtainable by free radical polymerization of
A) a monomer selected from, or a monomer mixture of,
(a) from 20 to 100% by weight of acrylic acid or methacrylic acid or of a mixture thereof, or of the alkali metal, alkaline earth metal or ammonium salts thereof,
(b) from 0 to 80% by weight of other monoethylenically unsaturated monomers which are copolymerizable with the monomers (a) and
(c) from 0 to 5% by weight of monomers having at least 2 ethylenically unsaturated, nonconjugated double bonds in the molecule,
in the presence of
B) monosaccharides, oligosaccharides, polysaccharides, oxidatively, hydrolytically or enzymatically degraded polysaccharides, oxidized hydrolytically degraded or oxidized enzymatically degraded polysaccharides, chemically modified mono-, oligo- or polysaccharides or a mixture of the stated compounds
in a weight ratio A : B of from 95 : 5 to 20 : 80, as a tanning agent for the self-tanning, pretanning and simultaneous tanning of pelts and skins and for the retanning of leather and skin.

2. Use of a water-soluble graft polymer as a leather tanning agent as claimed in claim 1, wherein crotonic acid, maleic acid, maleic anhydride, fumaric acid, citraconic acid, citraconic anhydride, C₁-C₈-alkyl or hydroxyalkyl esters of acrylic acid, methacrylic acid or crotonic acid, mono- or di-C₁-C₈-alkyl or -hydroxyalkyl esters of maleic acid, fumaric acid or citraconic acid, acrylamide, methacrylamide, methacrolein, acrylamidomethylpropanesulfonic acid, N-vinylimidazole or a mixture thereof have been used as component (b) of the monomer mixture A for the preparation of the graft polymer.

3. Use of a water-soluble graft polymer as a leather tanning agent as claimed in claim 1 or 2, wherein ethylene glycol diacrylate or glycol diacrylates of polyethylene glycols having a molecular weight of up to 3,000 or a mixture thereof have been used as component (c) of the monomer mixture A for the preparation of the graft polymer.

4. Use of a water-soluble graft polymer as a leather tanning agent as claimed in claim 1, wherein methacrylic acid or the alkali metal, alkaline earth metal or ammonium salts thereof alone have been used as monomer A or a mixture of at least 80% by weight of methacrylic acid or the alkali metal, alkaline earth metal or ammonium salts thereof and the monomers (b) have been used as monomer mixture A for the preparation of the graft polymer.

5. Use of a water-soluble graft polymer as a leather tanning agent as claimed in any of claims 1 to 4, wherein a hydrolytically degraded starch having a high content of monosaccharides or pure monosaccharides has been used as saccharide component B for the preparation of the graft polymer.

6. A process for the self-tanning, pretanning or simultaneous tanning of pelts and skins and for the retanning of leather and skin, wherein the tanning agents used are water-soluble graft polymers of monosaccharides, oligosaccharides, polysaccharides and derivatives thereof, obtainable by free radical polymerization of
A) a monomer selected from, or a monomer mixture of,
(a) from 20 to 100% by weight of acrylic acid or methacrylic acid or of a mixture thereof or of the alkali metal, alkaline earth metal or ammonium salts thereof,
(b) from 0 to 80% by weight of other monoethylenically unsaturated monomers which are copolymerizable with the monomers (a) and
(c) from 0 to 5% by weight of monomers having at least 2 ethylenically unsaturated, nonconjugated double bonds in the molecule,
in the presence of
B) monosaccharides, oligosaccharides, polysaccharides, oxidatively, hydrolytically or enzymatically degraded polysaccharides, oxidized hydrolytically degraded or oxidized enzymatically degraded polysaccharides, chemically modified mono-, oligo- or polysaccharides or a mixture of the stated compounds
in a weight ratio A : B of from 95 : 5 to 20 : 80.

## Revendications

1. Utilisation de polymères greffés hydrosolubles de monosaccharides, d'oligosaccharides, de polysaccharides et de leurs dérivés, pouvant être obtenus par polymérisation radicalaire
A) d'un monomère ou d'un mélange de monomères composé de
(a) 20 à 100% en poids d'acide acrylique, d'acide méthacrylique ou d'un mélange de ceux-ci, de leurs sels de métaux alcalins, de métaux alcalino-terreux ou d'ammonium,
(b) 0 à 80% en poids d'autres monomères à insaturation monoéthylénique qui sont copolymérisables avec les monomères (a),
(c) 0 à 5% en poids de monomères présentant dans la molécule au moins 2 doubles liaisons à insaturation éthylénique non conjuguées,
en présence de
B) monosaccharides, oligosaccharides, polysaccharides, polysaccharides dégradés par oxydation, par hydrolyse ou par voie enzymatique, polysaccharides dégradés par hydrolyse et oxydés ou par voie enzymatique et oxydes, mono-, oligo- ou polysaccharides modifiés chimiquement ou mélanges de ces composés,
dans un rapport pondéral A : B de (95 à 20) : (5 à 80), comme matières tannantes pour le tannage isolé, le prétannage et le co-tannage de peaux pelanées et de peaux en poils et pour le retannage de cuirs et de peaux.

2. Utilisation de polymères greffés hydrosolubles comme matières tannantes pour cuirs selon la revendication 1, le composant (b) du mélange de monomères A utilisé pour la préparation des polymères greffés étant l'acide crotonique, l'acide maléique, l'anhydride maléique, l'acide fumarique, l'acide citraconique, l'anhydride citraconique, un ester d'hydroxyalkyle ou d'alkyle en C₁-C₈ de l'acide acrylique, de l'acide méthacrylique ou de l'acide crotonique, un ester de mono- ou di(hydroxyalkyle ou alkyle en C₁-C₈) de l'acide maléique, de l'acide fumarique ou de l'acide citraconique, l'acrylamide, le méthacrylamide, la méthacroléine, l'acide acrylamidométhylpropanesulfonique, le N-vinylimidazole ou un mélange de ces composés.

3. Utilisation de polymères greffés hydrosolubles comme matières tannantes pour cuirs selon la revendication 1 ou 2, le composant (c) du mélange de monomères A utilisé pour la préparation des polymères greffés étant le diacrylate d'éthyleneglycol, des glycoldiacrylates de polyéthylèneglycols d'un poids moléculaire de 3000 au maximum ou un mélange de ces composés.

4. Utilisation de polymères greffés hydrosolubles comme matières tannantes pour cuirs selon la revendication 1, le monomère A utilisé pour la préparation des polymères greffés étant l'acide méthacrylique ou ses sels de métaux alcalins, de métaux alcalino-terreux ou d'ammonium seuls, ou le mélange de monomères A utilisé étant un mélange d'au moins 80% en poids d'acide méthacrylique ou de ses sels de métaux alcalins, de métaux alcalino-terreux ou d'ammonium et des monomères (b).

5. Utilisation de polymères greffés hydrosolubles comme matières tannantes pour cuirs selon l'une quelconque des revendications 1 à 4, les composants de type saccharide B utilisés pour la préparation des polymères greffés étant des amidons dégradés par hydrolyse contenant une forte proportion de monosaccharides ou des monosaccharides purs.

6. Procédé de tannage isolé, de prétannage et de cotannage de peaux pelanées et de peaux en poils, ainsi que de retannage de cuirs et de peaux, caractérisé en ce que l'on utilise, comme matières tannantes, des polymères greffés hydrosolubles de monosaccharides, d'oligosaccharides, de polysaccharides et de leurs dérivés, pouvant être obtenus par polymérisation amorcée par voie radicalaire
A) d'un monomère ou d'un mélange de monomères composé de
(a) 20 à 100% en poids d'acide acrylique, d'acide méthacrylique ou d'un mélange de ceux-ci, de leurs sels de métaux alcalins, de métaux alcalino-terreux ou d'ammonium,
(b) 0 à 80% en poids d'autres monomères à insaturation monoéthylénique qui sont copolymérisables avec les monomères (a),
(c) 0 à 5% en poids de monomères présentant dans la molécule au moins 2 doubles liaisons à insaturation éthylénique non conjuguées,
en présence de
B) monosaccharides, oligosaccharides, polysaccharides, polysaccharides dégradés par oxydation, par hydrolyse ou par voie enzymatique, polysaccharides dégradés par hydrolyse et oxydés ou par voie enzymatique et oxydés, mono-, oligo- ou polysaccharides modifiés chimiquement ou mélanges de ces composés,
dans un rapport pondéral A : B de (95 à 20) : (5 à 80).
